# EUROPEAN PATENT SPECIFICATION

(11) **EP 0 824 422 B1**
(45) Date of publication and mention of the grant of the patent: **02.08.2000**
(21) Application number: 96915093.7
(22) Date of filing: 10.05.1996
(51) Int. Cl.: B60R 22/42

(54) **RETRACTOR**
GURTAUFROLLER MIT VERSCHIEBBAREM SPULENKÖRPER
ENROULEUR DE CEINTURES DE SECURITE

(30) Priority: 10.05.1995 GB 9509429; 28.12.1995 US 581026
(43) Date of publication of application: 25.02.1998
(73) Proprietor: BREED AUTOMOTIVE TECHNOLOGY, INC., Lakeland, County of Polk, Florida (US)
(72) Inventor: AISTON, Brian Edward, Carlisle, Cumbria CA2 5HX (GB); SMITHSON, Alan George, Wetheral, Cumbria CA4 8QD (GB); HARTE, Joseph Patrick, Maryport, Cumbria CA15 6RP (GB); WILLIAMSON, Kenneth, Carlisle, Cumbria CA4 0DW (GB)
(74) Representative: Freeman, Jacqueline Carol
(86) International application number: GB9601142
(87) International publication number: WO9635596

(56) References cited:
- EP-A- 0 319 289
- EP-A- 0 443 764
- EP-A- 0 487 760
- DE-A- 3 417 877
- GB-A- 2 113 978
- GB-A- 2 126 876
- US-A- 4 394 034
- US-A- 5 029 770
- US-A- 5 174 604
- RESEARCH DISCLOSURE, no. 364, August 1994, EMSWORTH, GB, page 404 XP000468928 DISCLOSED ANONYMOUSLY: "Energy Absorbing Webgrabber - Concept C"

## Description

The present invention relates to a retractor for use with vehicle safety restraint belts and particularly to a weblocking retractor in which one or more clamps grip the belt webbing to prevent payout of the belt in the event of a crash or emergency situation.

Retractors and weblocking retractors are well known. Generally they comprise a cylindrical spool rotatably mounted in a frame with a return bias so that the belt can be protracted but is biased to the rewind position. One or more sensing mechanisms are included and cause the spool to lock-up during an emergency, such as when excessive acceleration or deceleration forces are detected. In a weblocking retractor, belt payout is further restrained by one or more wedges which grip the belt directly. One example is shown in US-A-5 029 770. EP-A-0 319 289 also discloses a weblocking retractor with a spool and a web-clamping mechanism operable to clamp belt webbing in response to sliding movement of the spool and discloses the features of the preamble of claim 1.

It is an object of the present invention to provide an improved weblocking retractor.

According to the present invention there is provided a weblocking retractor as defined in claim 1 comprising:
a spool about which seat belt webbing is wound;
the spool being mounted so as to be rotatable about an axis which is slidably mounted in a frame;
at least one sensing mechanism responsive to conditions indicative of a crash to cause the spool to lock to prevent further protraction of the seat belt webbing;
a web-clamping mechanism operable in response to a sliding movement of the spool relative to the frame, to clamp the seat belt webbing against further protraction of the belt; wherein
sliding movement of the spool takes place subsequent to locking of the spool and directly activates the clamping mechanism to clamp the webbing, wherein
the spool is supported for rotational movement on a spindle comprising one arm of a U-shaped needle which is mounted in slots in the frame to move with the spool in a sliding vertical linear movement.

The other arm of the U-shaped needle is received in another slot in the frame.

According to a preferred embodiment the spool and the sensing mechanism are moved vertically in response to occupant loading of the belt after spool locking. A carrier element supported in fixed relation to the spool and also a rewind spring for the spool are also preferably moved vertically.

For a better understanding of the present invention and to show how the same may be carried into effect, reference will now be made to the accompanying drawing in which:
Figure 1 is an isometric view of a frame;
Figure 2 is an assembly view showing many of the major features of the present invention;
Figure 3 is an enlarged isometric view of a reel assembly;
Figure 4 is a sensor mechanism in a preblocking condition;
Figure 5 shows the reel assembly in a vertically raised position;
Figure 6 is a cross-sectional side view of a retractor according to the present invention.

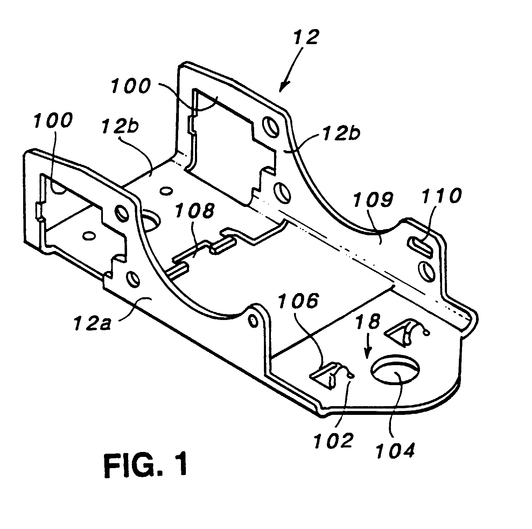

Figure 1 is an isometric view of the stationary frame 12 and comprises sides 12a and 12b and a back 12c. The upper portion of the frame includes a plurality of openings 100 to receive a web clamping mechanism 46. This web clamping mechanism 46 comprises a wedge housing 47 and two movable wedges 49a,b. The wedge housing 47 is held within the opening 100 by a spacer bar 47a which includes a web (seat belt) guide slot 47b. The lower portion 102 of the frame 12 includes a mounting hole 104 and anti-rotation projections 106 which are known in the art. The center or back portion 12b of the frame 12 includes a plurality of bosses 108 which slidingly engage and secure complementary member 107 in the back part 22c of a mounting member 22 of a reel assembly 14 shown below (see FIGURES w and 3) to enable the reel assembly to slide on the frame 12. The lower end 109 of the side 12b of the frame includes an elongated slot 110 through which a peg 180 of the reel assembly is received, thereby providing another means for slidably securing the mounting member 22 to the stationary frame 12.

Extending from each of the sides is a stationary panel or bushing which can be viewed as an extension of the frame sides 12a,b. Situated on the left hand frame side 12a is a mechanism bushing 164. This bushing 164 is attached to frame side 12a. The mechanism bushing includes an oval slot 160b which overlays slot 160" in frame side 12a. The bushing mechanism also includes an opening 174b in its middle through which a stub axle 170a of the spool 16 extends. Located at the lower end of the bushing 164 is an open cavity 211 to slidingly receive the walled housing 210 of the sensor mechanism.

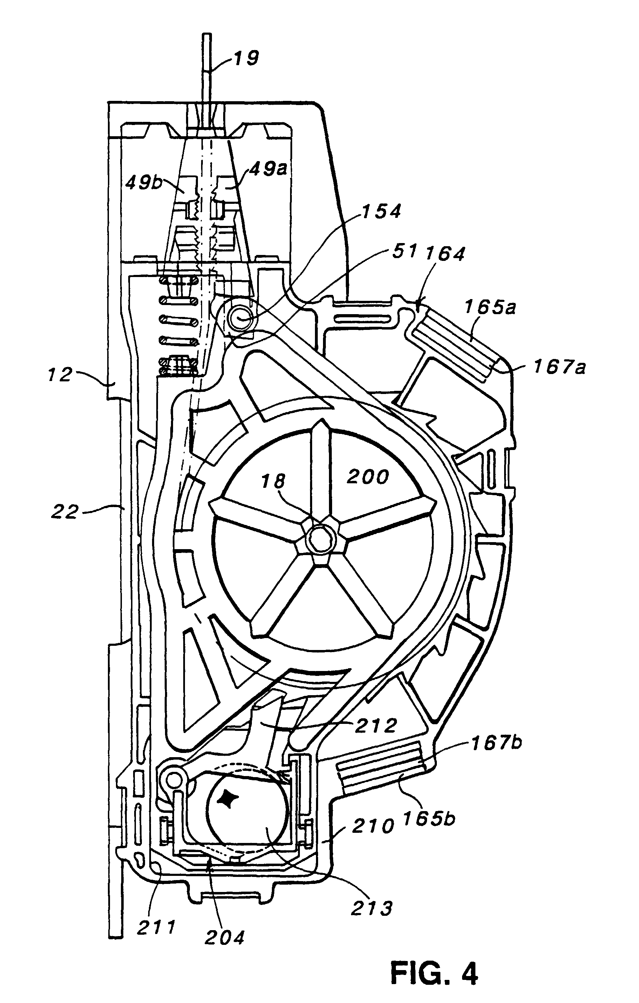

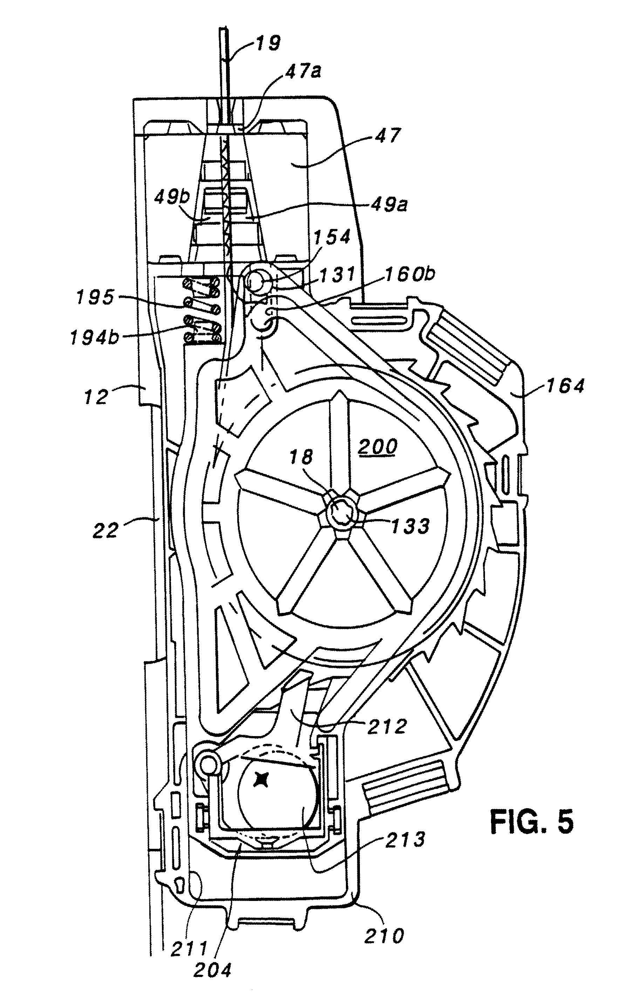

Situated on the right hand frame side 12b is a spring bushing 162 which is also referred to as an inner spring cover. This cover includes an oval slot 160a adjacent the oval slot 160" of the frame side 12b. The spring inner cover or bushing 162 includes a vertical oval slot 174a through which a stub axle 170 extends. This stub axle includes a slot 171 to receive an inner end of a rewind spring 178 and functions as a spring arbor. The bushings 162 and 164 are tied together by cross members 165a,b that fit in grooves 167a,b as shown in FIGURES 4 and 5.

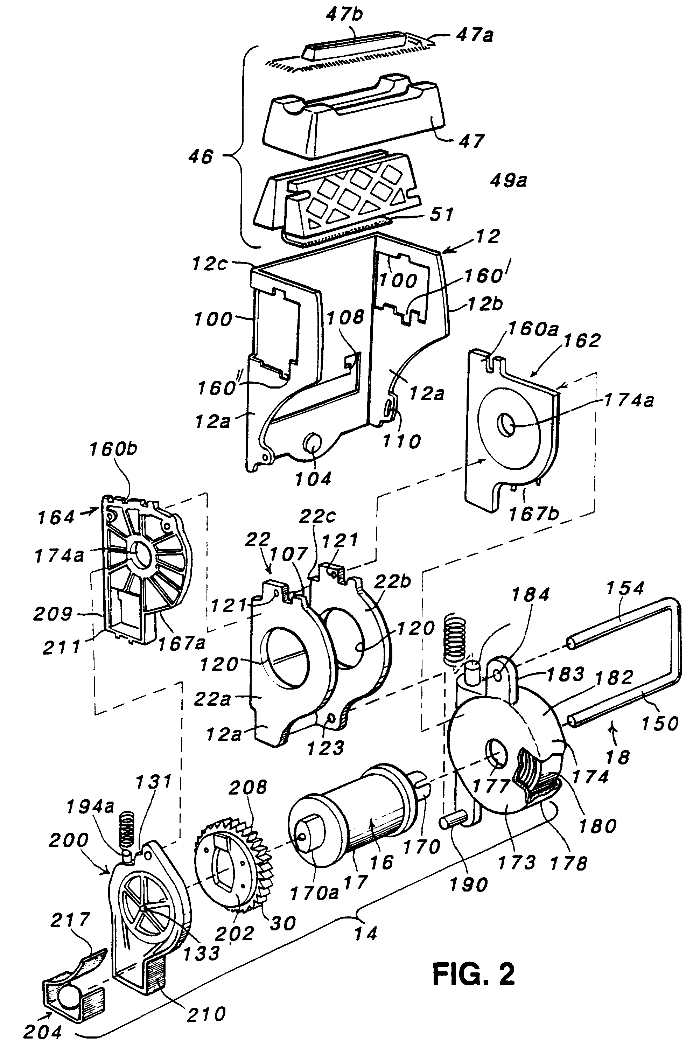

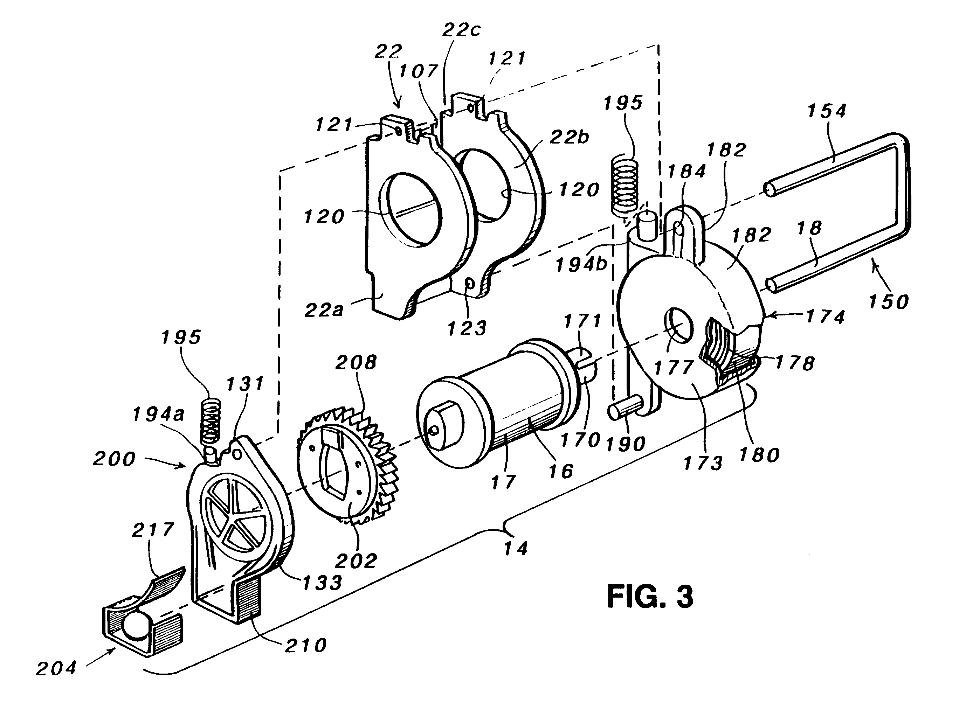

The reel assembly 14 is shown in greater detail in FIGURES 2 and 3. The reel assembly 14 comprises: a mounting member 22, the spool or reel 16; a spring cup 175 (having a rewind spring 178 therein), a U-shaped needle 150 having a top (actuator bar) 154, center and lower (shaft) legs 18 and a sensor mechanism 200 which includes a web sensor 202, a vehicle sensor 204 and a tooth ratchet wheel 208 fixed to the reel 16 which provides information to lock the ratchet wheel and hence the reel from further rotation. The tips r ends of the upper and lower legs of the U-shaped needle are serrated or knurled and are tightly received into openings 131 and 133 within the sensor mechanism.

The mounting member 22 includes two sides 22a, b and an upper back portion 22c and a lower back portion 22d. The upper portion of the back portion includes a sliding link or protrusion 107 that slidingly engages the cooperating part 108 in the center of the back 12c of the stationary frame 12. The interlinking of the frame and mounting member can also be achieved using bosses or rivets extending from the frame that are received in slots in the mounting member. Each of the sides 22a,b of the mounting member includes a central opening 120 to receive the spool or reel 16. Each side 22a,b also includes a small opening 121 through which the upper leg (actuator bar) 154 of the U-shaped needle extends thereby linking the two sides 22a,b together. The lower end of the right hand side 22b of the mounting member also includes another small opening 123 through which a peg or pin 190 extends from the spring cup 175.

The sensor mechanism 200 is a multi-purpose part. Situated at the lower end of the mechanism is a walled housing 209 which defines a cavity 211 in which is placed a part of the sensing mechanism housing the vehicle sensor 204. This vehicle sensor includes a pivoted pawl 212 and an inertia mass 213. During an emergency the mass is moved and raises the pawl causing it to engage the teeth 30 (to achieve a pre-blocking condition) of the ratchet wheel 208 thereby preventing further rotation of the reel 16.

The spool or reel 16 includes a center portion 17 about which the seat belt 19 is wound. The sub axles 170 and stub axle 170a extend from this center part 17. The spool or reel is hollow and the lower leg 18 of the U-shaped needle extends therethrough. The spool rotates about this lower leg.

The spring cup 174 includes a back plate 173 and a generally circular rim 182. The rewind spring 178 is received within the space defined by the back plate and the rim. The lower end of the plate includes the extending peg or pin 190 which is received with the small opening 123 in the lower end of the right hand side 22b of the mounting member in a generally known manner. The outer end of the rewind spring 178 is looped about a projection 180 formed in the spring cup 175. The spring cup also includes an opening 177 through which the spring arbor 170 extends. The spring cup 175 also includes, on or near its top, an extension 183 which includes an opening 184 through which the upper leg of the U-shaped needle extends. The spring cup includes an upstanding boss or projection 194b to receive biasing spring 195 to push or bias the reel assembly downward. A similar boss or projection 194a is located on a portion of the sensor mechanism for another spring 195.

The lower leg 18 of the U-shaped needle defines the shaft 18 and provides bearing surfaces 152a and 152b about which the spool rotates. The top leg 154 of the U-shaped needle 18 extends through the openings 160', 160" in the frame, as well as narrow guide slots 160a in a spring inner cover 162 (on the right hand side of the retractor) and slot 160b in a mechanism bushing 164 (on the left hand side of the retractor).

As can be seen, the end 192 of the peg 190 physically joins the lower end of the right side 22b of the mounting member 22 to further ensure that the spring cup 174, the U-shaped needle 150 and the mounting member 22 move together as an assembly. The rewind spring is covered by a outer cover and the sensor mechanism is also covered by another outer cover (both of which are not shown). The left hand ends of the upper and lower legs of the U-shaped needle are received within openings 131 and 133 of the sensor mechanism 200.

As can be appreciated, the spring cup 174 is restrained to slide only vertically within the guide slot 160a with the upper leg 154. The lower part of the spring cup 174, by virtue of the use of the peg 190 and oval hole 110, can also only slide vertically. The motion of the left hand portion of the winding mechanism is similarly restrained to achieve only a sliding vertical movement. This is achieved, as the upper leg 154 of the U-shaped needle is received through the vertically oriented guide opening 160b in the mechanism bushing, thereby restraining the upper portion of the sensor mechanism 200 to move vertically. The lower portion of the sensor mechanism, and in particular the housing 210 (in which the vehicle sensor is located), slides against vertical guide walls of the cavity 211 formed within the mechanism bushing. Again, by restraining the sensor mechanism at two locations, both of which only provide for sliding vertical movement, the left hand portion of the winding mechanism is similarly restrained.

Returning briefly to FIGURES 1 and 2, as mentioned the frame 12 includes two sides 12a,b and a rear part 12c. Each side 12a,b includes a square shaped opening into which is placed the web clamping mechanism 46. The front wedge 49a includes a semi-circular, open groove 51 into which the upper leg 154 of the U-shaped needle 18 is secured to provide for a positive engagement between the upper leg and this wedge. The rear wedge 49b is selectively engaged and lifted by a rear portion of the mounting member as it moves vertically.

During assembly, the various parts of the retractor reel assembly 14 are positioned relative to parts of the frame 12 and the bushings 162, and 164 as follows:

The mounting member 22 is placed between each of the bushings 162, 164 and the reel 16 placed through the respective opening in the sides 22a,b of the mounting member 22 with the integral spring arbor 170 extending through the oval opening 174a in the spring inner cover 162. The spring cup 174 is placed against the outside surface of the spring inner cover (spring bushing) 162 with its peg 190 extending through the oval opening 110 in the lower end of the right hand side of the frame 22b. This peg extends through the mating opening 123 in the side 22b of the mounting member 22. In this configuration the return spring 178 is attached to the spring arbor portion of the reel 126 and to the spring cup 174. The upper leg 154 of the U-shaped needle 150 is inserted through the opening 184 in the spring cup, the opening 160a in the spring inner cover 162, the opening 160" in the right hand side 12b of the frame, through the opening 121 in the right hand side of the mounting member, through the groove 51 of the front wedge 49a, and the opening 121 on the left side of the mounting member 22a, the opening 160" in the frame, the opening 160b in the mechanism bushing 164 and the opening 131 in the sensor mechanism 200. The lower leg of the U-shaped needle is inserted through the spring arbor (which already extends into the spring cup 174 and through the other parts of the reel and through the opening 133 in the mechanism bushing 164. With the ends of the upper and lower legs 154 and 18 of the U-shaped needle 150 attached to the sensor mechanism 200, the sensor housing 210 will be positioned within the cavity 211 formed in the mechanism bushing 164. The outer covers are fitted to the bushings to protect the sensor mechanism 200 and spring 178.

During an emergency, one or the other of the inertial sensors, the web or vehicle sensor locks with the ratchet wheel pre-blocking (locking, preventing) the reel 16 from further rotation (see FIGURE 4). With the reel now pre-blocked, the reel assembly is vertically lifted as forces are applied to the seat belt 19. As the reel assembly is lifted the upper leg 154 of the U-shaped needle 150 lifts the front wedge 49a initiating the clamping of the seat belt 19. The rear of the mounting member 22 may also be in contact with the rear wedge 49b and lifts this wedge as well. FIGURE 5 shows the reel assembly 14 in its lifted position and the wedges 49a,b clamped about the seat belt (webbing) 19.

Many changes and modifications in the above described embodiment of the invention can, of course, be carried out without departing from the scope thereof. Accordingly, that scope is intended to be limited only by the scope of the appended claims.

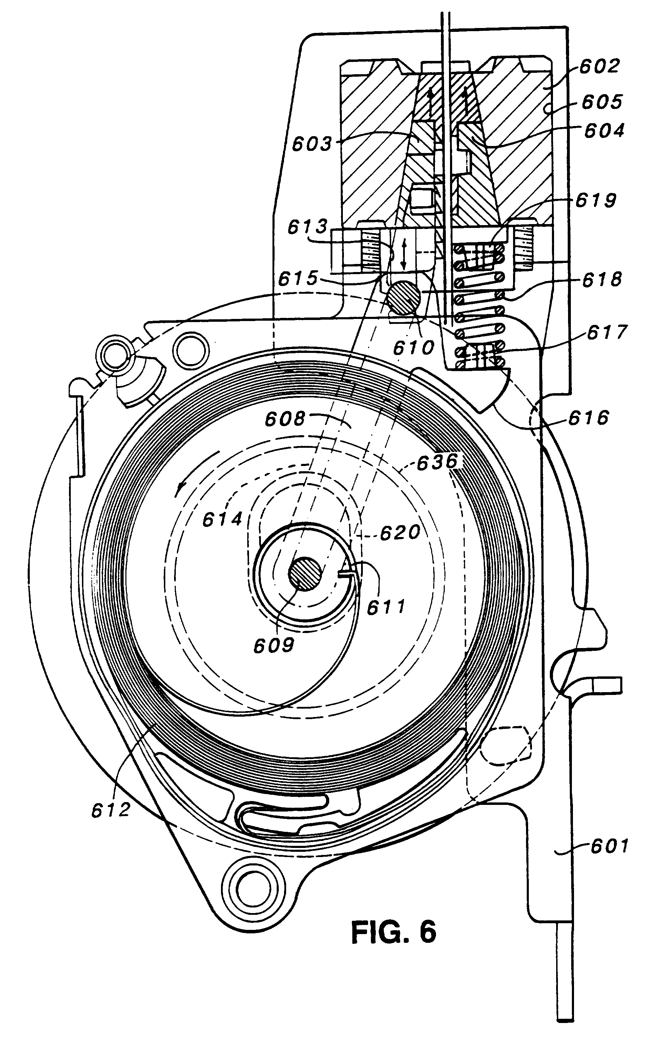

The retractor shown in Figure 6 comprises a frame 601 supporting a wedge housing 602 having two opposing, sliding wedges 603 and 604. The wedge housing 602 is received within an opening 605 in the frame 601 and includes two sloping surfaces which urge the wedges 603 and 604 closer to one another as they are lifted. A spool 606 is supported within the frame 601 by a U-shaped pin having a centre leg 608 and two side legs the ends of which are shown at 609 and 610. A first side leg 609 is received within the spool 606 and serves as its rotational axis. The spool is rotationally supported on a first side of the first side leg by a bushing and supported on a second side of the first side leg by as an example the spring arbor 611 which also serves as a bushing. A rewind retractor spring 612 of known variety (typically a clock spring) is attached to the spring arbor 611 to provide a rewind force to rewind the seat belt upon the spool 606. The second side leg 610 of the U-shaped pin, is received within a guide which is a first vertical slot 613 formed in the frame 601. This second side leg 610 of the U-shaped in is entrained within this guide slot 613 so that the U-shaped needle and hence the spool 606 can only move vertically.

A carrier element 614 extends along the centre leg 608 of the U-shaped needle and is movable therewith. The carrier 614 includes an upper end 615 the edge of which abuts a lower end of at least one of the wedges 603, 604. Upward movement of the carrier 614 lifts the wedges 603, 604 upwardly within the wedge housing 602. The carrier 614 further includes an extending shoulder 616 having a boss 617 formed thereon for receipt of one end of return spring 618. The other end of the return spring 618 is received about another boss 619 mounted to the frame 601. Another return spring may be positioned on the other side of the retractor if needed.

The spool 606 is also supported relative to the centre of the frame. As an example, the spring arbor 611 may be entrained within a first oval, vertically extending slot 620 on one side of the frame. The other side of the retractor may similarly be supported relative to a second oval, vertical extending slot such as by having a stub axle or other part of the spool extend therethrough. In this manner the spool 606, upon lock-up of a ratchet wheel can only slide vertically upward relative to the frame.

While not shown, the other side of the retractor, also referred to as the mechanism side, includes a toothed ratchet wheel, an associated sensing mechanism including a web sensor and vehicle sensor of known variety which, upon activation, causes lock up of the spool.

As is known this lock up occurs when vehicle deceleration exceeds a predetermined level or the rate at which the seat belt is protracted exceeds another level.

During an emergency one or the other of the web or vehicle sensor cause a pawl to engage the teeth on the ratchet wheel to block the spool from further rotation. Any continued force on the belt, such as that exerted by the occupant, is directly transferred to the block spool at the interface of the pawl and ratchet. When this force is sufficient to overcome the bias force of the return spring(s), the spool including its rewind spring and associated sensors, is lifted vertically upward relative to the frame. As mentioned the spool is guided within its oval slot(s) and the pin guided within the guide slot. As the spool is lifted the carrier pushes on at least one of the wedges moving same vertically upwards closing the spacing between the wedges relative to the seat belt passing therethrough clamping the seat belt therebetween.

## Claims

1. A weblocking retractor comprising:
a spool (16) about which seat belt webbing (17) is wound;
the spool (16) being mounted so as to be rotatable about an axis which is slidably mounted in a frame (12) ;
at least one sensing mechanism (204) responsive to conditions indicative of a crash to cause the spool (16) to lock to prevent further protraction of the seat belt webbing (17);
a web-clamping mechanism (46) operable in response to a sliding movement of the spool (16) relative to the frame (12), to clamp the seat belt webbing (17) against further protraction of the belt; wherein
sliding movement of the spool (16) takes place subsequent to locking of the spool (16) and directly activates the clamping mechanism (46) to clamp the webbing (17), and
the spool (16) is supported for rotational movement on a spindle comprising one arm (154) of a U-shaped needle (150), characterised in that the needle is mounted in slots in the frame to move with the spool in a sliding vertical linear movement.

2. A weblocking retractor according to claim 1 characterised in that the second arm (154) of the U-shaped needle (150) comprises an actuator bar to move the clamping mechanism (46) into clamping engagement with the webbing.

3. A weblocking retractor according to claim 1 comprising a carrier element supported in fixed relation and movable with the U-shaped needle, comprising a shoulder abutting the web-clamping mechanism to move it into a web-clamping condition.

4. A weblocking retractor according to any preceding claim, wherein the web-clamping mechanism (46) comprises two opposing sliding wedges (49a) arranged for gripping the webbing (17) therebetween.

5. A weblocking retractor according to claim 4, wherein the web-clamping mechanism (46) comprises a wedge housing (47) having two sloping surfaces for urging the wedges (49a) closer to one another as they are lifted.

6. A weblocking retractor according to claim 2 wherein the second arm (154) abuts the lower end of at least one wedge (49a) to move it into clamping engagement.

7. A weblocking retractor according to any one of claims 4 to 6 comprising a return spring (195,618) for the wedges.

8. A weblocking retractor according to claim 7 comprising two wedge return springs (195,618), one on each side of the retractor.

9. A weblocking retractor according to any preceding claim, wherein the spool (16) is supported relative to the centre of the frame.

10. A weblocking retractor according to any preceding claim, wherein the force on the belt after lock-up of the spool is transferred directly to the blocked spool (16) to lift the spool against the force of a return spring.

11. A weblocking retractor according to claim 10, wherein the force on the belt is transferred to the spool at the interface of sensing mechanism (204) which comprises a co-operating pawl (217) and ratchet (202).

12. A weblocking retractor according to any preceding claim, comprising oval guide slots for the U-shaped needle.

## Patentansprüche

1. Gurtbandblockierender Gurtaufroller, aufweisend:
einen Spulenkörper (16), auf den das Sicherheitsgurt-Gurtband (17) aufgewickelt ist;
wobei der Spulenkörper (16) so angebracht ist, daß er um eine Achse drehbar ist, die in einem Rahmen (12) gleitbar angebracht ist;
mindestens einen Fühlmechanismus (204), der auf Zustände, die einen Aufprall anzeigen, anspricht, um zu bewirken, daß der Spulenkörper (16) blockiert wird, damit eine weitere Ausziehung des Sicherheitsgurt-Gurtbandes (17) verhindert wird;
einen Gurtband-Festklemmechanismus (46), der als Reaktion auf eine Gleitbewegung des Spulenkörpers (16) relativ zu dem Rahmen (12) betätigbar ist, um das Sicherheitsgurt-Gurtband (17) bezüglich einer weiteren Ausziehung des Gurts festzuklemmen; wobei
die Gleitbewegung des Spulenkörpers (16) nach dem Blockieren des Spulenkörpers (16) erfolgt, und den Festklemmechanismus (46) direkt aktiviert, um das Gurtband (17) festzuklemmen, und
der Spulenkörper (16) zwecks einer Drehbewegung auf einer Welle getragen wird, die einen Arm (154) einer U-förmigen Nadel (150) aufweist,
dadurch gekennzeichnet, daß die Nadel in Schlitzen des Rahmens angebracht ist, um sich mit dem Spulenkörper gemäß einer gleitenden, vertikalen, linearen Bewegung zu bewegen.

2. Gurtbandblockierender Gurtaufroller gemäß Anspruch 1, dadurch gekennzeichnet, daß der zweite Arm (154) der U-förmigen Nadel (150) einen Aktuatorstab aufweist, um den Festklemmechanismus (46) in festklemmenden Eingriff mit dem Gurtband zu bewegen.

3. Gurtbandblockierender Gurtaufroller gemäß Anspruch 1, der ein Mitnehmerelement aufweist, das in fester Beziehung getragen wird und mit der U-förmigen Nadel bewegbar ist, und das eine Schulter aufweist, die gegen den Gurtband-Festklemmechanismus stößt, um ihn in einen Gurtband-Festklemmzustand zu bewegen.

4. Gurtbandblockierender Gurtaufroller gemäß irgendeinem vorhergehenden Anspruch, wobei der Gurtband-Festklemmechanismus (46) zwei einander gegenüberliegende Gleitkeile (49a) aufweist, die ausgelegt sind, um das Gurtband (17) dazwischen festzuhalten.

5. Gurtbandblockierender Gurtaufroller gemäß Anspruch 4, wobei der Gurtband-Festklemmechanismus (46) ein Keilgehäuse (47) aufweist, das zwei schräge Oberflächen hat, um die Keile (49a) näher aneinander zu drücken, wenn sie angehoben werden.

6. Gurtbandblockierender Gurtaufroller gemäß Anspruch 2, wobei der zweite Arm (154) gegen das untere Ende von mindestens einem Keil (49a) stößt, um ihn in festklemmenden Eingriff zu bewegen.

7. Gurtbandblockierender Gurtaufroller gemäß irgendeinem der Ansprüche 4 bis 6, der eine Rückholfeder (195, 618) für die Keile aufweist.

8. Gurtbandblockierender Gurtaufroller gemäß Anspruch 7, der zwei Keilrückholfedern (195, 618), eine auf jeder Seite des Gurtaufrollers, aufweist.

9. Gurtbandblockierender Gurtaufroller gemäß irgendeinem vorhergehenden Anspruch, wobei der Spulenkörper (16) relativ zu dem Zentrum des Rahmens getragen wird.

10. Gurtbandblockierender Gurtaufroller gemäß irgendeinem vorhergehenden Anspruch, wobei die nach Blockierung des Spulenkörpers auf den Gurt wirkende Kraft direkt auf den verriegelten Spulenkörper (16) übertragen wird, um den Spulenkörper entgegen der Kraft einer Rückholfeder anzuheben.

11. Gurtbandblockierender Gurtaufroller gemäß Anspruch 10, wobei die auf den Gurt wirkende Kraft an der Grenzfläche des Fühlmechanismus (204), der eine Sperrklinke (217) und ein damit zusammenwirkendes Klinkenrad (202) aufweist, auf den Spulenkörper übertragen wird.

12. Gurtbandblockierender Gurtaufroller gemäß irgendeinem vorhergehenden Anspruch, der ovale Führungsschlitze für die U-förmige Nadel aufweist.

## Revendications

1. Enrouleur à blocage de la sangle, comprenant:
une bobine (16) autour de laquelle la sangle de la ceinture de siège (17) est enroulée;
la bobine (16) étant montée de sorte à pouvoir tourner autour d'un axe monté par glissement dans un cadre (12);
au moins un mécanisme de détection (204) réagissant à des conditions signalant une collision, destiné à entraîner le blocage de la bobine (16) pour empêcher un déroulement ultérieur de la sangle de la ceinture de siège (17);
un mécanisme de serrage de la sangle (46) pouvant être actionné en réponse à un déplacement par glissement de la bobine (16) par rapport au cadre (12), pour serrer la sangle de la ceinture de siège (17) contre un déroulement ultérieur de la ceinture; dans lequel
le déplacement par glissement de la bobine (16) se produisant après le blocage de la bobine (16), actionnant directement le mécanisme de serrage (46) en vue d'un serrage de la sangle (17), et
la bobine (16) étant supportée en vue d'un déplacement par rotation sur une broche comprenant un bras (154) d'une aiguille en U (150),
caractérisé en ce que l'aiguille est montée dans des fentes dans le cadre, en vue d'un déplacement par glissement vertical et linéaire avec la bobine.

2. Enrouleur à blocage de la sangle selon la revendication 1, caractérisé en ce que le deuxième bras (154) de l'aiguille en U (150) comprend une barre d'actionnement destinée à déplacer le mécanisme de serrage (46) en vue de son engagement par serrage dans la sangle.

3. Enrouleur à blocage de la sangle selon la revendication 1, comprenant un élément de support supporté de manière fixe et pouvant se déplacer avec l'aiguille en U, comprenant un épaulement butant contre le mécanisme de serrage de la sangle en vue d'un déplacement dans un état de serrage de la sangle.

4. Enrouleur à blocage de la sangle selon l'une quelconque des revendications précédentes, dans lequel le mécanisme de serrage de la sangle (46) comprend deux cales à glissement opposées (49a), agencées de sorte à serrer la sangle (17) entre elles.

5. Enrouleur à blocage de la sangle selon la revendication 4, dans lequel le mécanisme de serrage de la sangle (46) comprend un boîtier de cale (47) comportant deux surfaces inclinées pour rapprocher les cales (49a) par poussée lors de leur soulèvement.

6. Enrouleur à blocage de la sangle selon la revendication 2, dans lequel le deuxième bras (154) bute contre l'extrémité inférieure d'au moins une cale (49a) en vue de son déplacement dans un engagement par serrage.

7. Enrouleur à blocage de la sangle selon l'une quelconque des revendications 4 à 6, comprenant un ressort de rappel (195, 618) pour les cales.

8. Enrouleur à blocage de la sangle selon la revendication 7, comprenant deux ressorts de rappel des cales (195, 618), un sur chaque côté de l'enrouleur.

9. Enrouleur à blocage de la sangle selon l'une quelconque des revendications précédentes, dans lequel la bobine (16) est supportée par rapport au centre du cadre.

10. Enrouleur à blocage de la sangle selon l'une quelconque des revendications précédentes, dans lequel la force appliquée à la ceinture après le blocage de la bobine est transférée directement à la bobine bloquée (16) pour soulever la bobine contre la force d'un ressort de rappel.

11. Enrouleur à blocage de la sangle selon la revendication 10, dans lequel la force appliquée à la ceinture est transférée vers la bobine au niveau de l'interface du mécanisme de détection (204), comprenant un cliquet (217) et un rochet (202) de coopération.

12. Enrouleur à blocage de la sangle selon l'une quelconque des revendications précédentes, comprenant des fentes de guidage ovales pour l'aiguille en U.
